# EUROPEAN PATENT APPLICATION

(11) **EP 4 618 667 A1**
(43) Date of publication of application: **17.09.2025**
(21) Application number: 23896500.8
(22) Date of filing: 13.11.2023
(51) Int. Cl.: H04W 72/0453

(54) **COMMUNICATION METHOD, APPARATUS AND SYSTEM, AND STORAGE MEDIUM**

(30) Priority: 01.12.2022 CN 202211539111
(71) Applicant: Huawei Technologies Co., Ltd., Shenzhen, Guangdong 518129 (CN)
(72) Inventor: CHEN, Xi, Shenzhen, Guangdong 518129 (CN); ZHANG, Kuo, Shenzhen, Guangdong 518129 (CN); LI, Liangchuan, Shenzhen, Guangdong 518129 (CN)
(74) Representative: Isarpatent
(86) International application number: PCT/CN2023/131191
(87) International publication number: WO 2024/114348

(57) **Abstract**

This application belongs to the communication field, and discloses a communication method, an apparatus, a system, and a storage medium. The method includes: A first node generates a first signal to be sent to a second node, where a first frequency resource is used for the first signal; the first frequency resource is adjacent to a second frequency resource; the second frequency resource is used for transmitting a signal to be sent to the second node and the signal transmitted on the second frequency resource is different from the first signal, or the second frequency resource is not used for transmitting a signal; and a width of the second frequency resource is greater than or equal to a width of the first frequency resource. The first node sends the first signal. This application can reduce communication costs.

## Description

This application claims priority to Chinese Patent Application No. 202211539111.0, filed on December 1, 2022 and entitled "COMMUNICATION METHOD, APPARATUS, SYSTEM, AND STORAGE MEDIUM", which is incorporated herein by reference in its entirety.

### TECHNICAL FIELD

This application relates to the communication field, and in particular, to a communication method, an apparatus, a system, and a storage medium.

### BACKGROUND

Nodes in an optical communication system communicate with each other through an optical fiber. For example, the optical communication system includes a first node and a second node, the first node and the second node are connected through an optical fiber, and the first node generates a first signal to be sent to the second node, and sends the first signal to the second node through the optical fiber.

The second node includes a standard coherent receiver, and the second node receives the first signal by using the standard coherent receiver. However, the standard coherent receiver has a complex structure and high costs. That the second node uses the standard coherent receiver to receive the first signal increases communication costs.

### SUMMARY

This application provides a communication method, an apparatus, a system, and a storage medium, to reduce communication costs. The technical solutions are as follows.

According to a first aspect, this application provides a communication method. In the method, a first node generates a first signal to be sent to a second node, where a first frequency resource is used for the first signal; the first frequency resource is adjacent to a second frequency resource; the second frequency resource is used for transmitting a signal of the second node and the signal transmitted on the second frequency resource is different from the first signal, or the second frequency resource is not used for transmitting a signal; and a width of the second frequency resource is greater than or equal to a width of the first frequency resource. The first node sends the first signal.

Because the first frequency resource used for the first signal is adjacent to the second frequency resource; the second frequency resource is used for transmitting a signal to be sent to the second node, or the second frequency resource is not used for transmitting a signal; and the width of the second frequency resource is greater than or equal to the width of the first frequency resource, when the second node receives the first signal by using a simplified coherent receiver, the signal on the second frequency resource does not affect receiving of the first signal on the first frequency resource by the simplified coherent receiver, so that the second node can receive a signal by using the simplified coherent receiver. The simplified coherent receiver has a simple structure and low costs, and therefore communication costs are reduced.

In a possible implementation, the first node generates a second signal to be sent to a third node, where a third frequency resource is used for the second signal; the third frequency resource is adjacent to a fourth frequency resource; the fourth frequency resource is used for transmitting a signal to be sent to the third node and the signal transmitted on the fourth frequency resource is different from the second signal, or the fourth frequency resource is not used for transmitting a signal; and a width of the fourth frequency resource is greater than or equal to a width of the third frequency resource. The first node sends a first group of signals to the second node and the third node, where the first group of signals includes the first signal and the second signal.

In the first group of signals, the third frequency resource is used for the second signal, the first frequency resource is used for the first signal, and the second frequency resource adjacent to the first frequency resource and the third frequency resource are different frequency resources. In this case, the second node receives a signal on the first frequency resource and the second frequency resource by using the simplified coherent receiver, and does not receive a signal on the third frequency resource, so that the second signal on the third frequency resource does not affect receiving of the first signal by the second node by using the simplified coherent receiver, and that the second node can successfully receive the first signal is ensured.

In another possible implementation, the first signal is adjacent to the second signal, and the second frequency resource and the fourth frequency resource overlap in frequency. In this way, overlapping frequency may be shared by the first signal and the second signal, to improve frequency resource utilization.

In another possible implementation, the second frequency resource is used for transmitting a signal of the second node. The first node generates a third signal to be sent to the second node, where the second frequency resource is used for transmitting the third signal, and an information amount of the third signal is less than an information amount of the first signal, or transmit power of the third signal is less than transmit power of the first signal. The first node sends the third signal. Because the information amount of the third signal is less than the information amount of the first signal, or because the transmit power of the third signal is less than the transmit power of the first signal, the second node may distinguish the first signal on the first frequency resource from the third signal on the second frequency resource by using the simplified coherent receiver. In this way, that the second node can receive the first signal by using the simplified coherent receiver is ensured.

In another possible implementation, frequency of a local oscillator laser of the second node is within a range from first frequency to second frequency, the first frequency is frequency at a junction of the first frequency resource and the second frequency resource, the second frequency is intermediate frequency of a target frequency resource, the target frequency resource includes the first frequency resource and the second frequency resource, and the local oscillator laser is a laser signal used by the second node to receive the first signal. Because the frequency of the local oscillator laser of the second node is within the range from the first frequency to the second frequency, it is ensured that the second node receives, on the first frequency resource and the second frequency resource by using the simplified coherent receiver, a signal that belongs to the second node.

In another possible implementation, the first signal belongs to the first group of signals, and the first group of signals includes at least one signal. The first node generates a fourth signal to be sent to a fourth node, where a fifth frequency resource used for the fourth signal is adjacent to a sixth frequency resource, the sixth frequency resource is used for transmitting a signal to be sent to the fourth node or is not used for transmitting a signal, a width of the sixth frequency resource is greater than or equal to a width of the fifth frequency resource, the fourth signal belongs to a second group of signals, and the second group of signals includes at least one signal. The first node sends a first channel of signals, where the first channel of signals includes the first group of signals and the second group of signals, a guard interval exists between the first group of signals and the second group of signals, and the first channel of signals is used for enabling a filtering unit to split the first group of signals and the second group of signals at the guard interval; and sends the first group of signals to the second node, and sends the second group of signals to the fourth node, where the filtering unit is located on a path from the first node to the second node and the fourth node. Because the first channel of signals includes a plurality of groups of signals, the filtering unit may split each group of signals from the first channel of signals, and send each signal to a node corresponding to each group of signals, to improve a signal sending rate.

In another possible implementation, the first node receives a fifth signal sent by the second node and a sixth signal sent by the third node, where a seventh frequency resource is used for the fifth signal, the seventh frequency resource is adjacent to an eighth frequency resource, a ninth frequency resource is used for the sixth signal, the eighth frequency resource is adjacent to the ninth frequency resource, and a signal transmitted on the eighth frequency resource includes a conjugate signal of the fifth signal and a conjugate signal of the sixth signal. In this way, the second node and the third node share the eighth frequency resource. This improves the frequency resource utilization and reduces a frequency width that needs to be received by the first node.

According to a second aspect, this application provides a communication method. In the method, a second node receives a first signal, where a first frequency resource is used for the first signal; the first frequency resource is adjacent to a second frequency resource; the second frequency resource is used for transmitting a signal of the second node and the signal transmitted on the second frequency resource is different from the first signal, or the second frequency resource is not used for transmitting a signal; and a width of the second frequency resource is greater than or equal to a width of the first frequency resource. The second node obtains information content of the first signal from the first signal. Because the first frequency resource used for the first signal is adjacent to the second frequency resource; the second frequency resource is used for transmitting a signal of the second node, or the second frequency resource is not used for transmitting a signal; and the width of the second frequency resource is greater than or equal to the width of the first frequency resource, when the second node receives the first signal by using a simplified coherent receiver, the signal on the second frequency resource does not affect receiving of the first signal on the first frequency resource by the simplified coherent receiver, so that the second node can receive a signal by using the simplified coherent receiver. The simplified coherent receiver has a simple structure and low costs, and therefore communication costs are reduced.

In a possible implementation, the second node receives a first group of signals, where the first group of signals includes a second signal and the first signal; the second signal is a signal of a third node; a third frequency resource is used for the second signal; the third frequency resource is adjacent to a fourth frequency resource; the fourth frequency resource is used for transmitting a signal of the third node and the signal transmitted on the fourth frequency resource is different from the second signal, or the fourth frequency resource is not used for transmitting a signal; and a width of the fourth frequency resource is greater than or equal to a width of the third frequency resource. The second node obtains the first signal from the first group of signals.

In the first group of signals, the third frequency resource is used for the second signal, the first frequency resource is used for the first signal, and the second frequency resource adjacent to the first frequency resource and the third frequency resource are different frequency resources. In this case, the second node receives a signal on the first frequency resource and the second frequency resource by using the simplified coherent receiver, and does not receive a signal on the third frequency resource, so that the second signal on the third frequency resource does not affect receiving of the first signal by the second node by using the simplified coherent receiver, and that the second node can successfully receive the first signal is ensured.

In another possible implementation, the first signal is adjacent to the second signal, and the second frequency resource and the fourth frequency resource overlap in frequency. In this way, overlapping frequency may be shared by the first signal and the second signal, to improve frequency resource utilization.

In another possible implementation, the second frequency resource is used for transmitting a signal of the second node. The second node receives a third signal, where a frequency resource used for the third signal is the second frequency resource, and an information amount of the third signal is less than an information amount of the first signal, or transmit power of the third signal is less than transmit power of the first signal. Because the information amount of the third signal is less than the information amount of the first signal, or because the transmit power of the third signal is less than the transmit power of the first signal, the second node may distinguish the first signal on the first frequency resource from the third signal on the second frequency resource by using simplified coherent receiving. In this way, that the second node can receive the first signal by using the simplified coherent receiver is ensured.

In another possible implementation, frequency of a local oscillator laser of the second node is within a range from first frequency to second frequency, the first frequency is frequency at a junction of the first frequency resource and the second frequency resource, the second frequency is intermediate frequency of a target frequency resource, and the target frequency resource includes the first frequency resource and the second frequency resource. The second node receives the first signal based on the local oscillator laser. Because the frequency of the local oscillator laser of the second node is within the range from the first frequency to the second frequency, it is ensured that the second node receives, on the first frequency resource and the second frequency resource by using the simplified coherent receiver, a signal that belongs to the second node.

According to a third aspect, this application provides a communication apparatus, configured to perform the method according to any one of the first aspect or the possible implementations of the first aspect. Specifically, the apparatus includes units configured to perform the method according to any one of the first aspect or the possible implementations of the first aspect.

According to a fourth aspect, this application provides a communication apparatus, configured to perform the method according to any one of the second aspect or the possible implementations of the second aspect. Specifically, the apparatus includes units configured to perform the method according to any one of the second aspect or the possible implementations of the second aspect.

According to a fifth aspect, this application provides a first node, including a memory, a processor, and a computer program stored in the memory, where the processor executes the computer program, to enable the first node to implement the method according to any one of the first aspect or the possible implementations of the first aspect.

According to a sixth aspect, this application provides a second node, including a memory, a processor, and a computer program stored in the memory, where the processor executes the computer program, to enable the second node to implement the method according to any one of the second aspect or the possible implementations of the second aspect.

According to a seventh aspect, this application provides a computer program product. The computer program product includes a computer program stored in a computer-readable storage medium, and the computer program is loaded by a processor to implement the method according to any one of the first aspect, the second aspect, the possible implementations of the first aspect, or the possible implementations of the second aspect.

According to an eighth aspect, this application provides a computer-readable storage medium, configured to store a computer program. The computer program is loaded by a computer to perform the method according to any one of the first aspect, the second aspect, the possible implementations of the first aspect, or the possible implementations of the second aspect.

According to a ninth aspect, this application provides a chip, including a memory and a processor, where the memory is configured to store computer instructions, and the processor is configured to: invoke the computer instructions from the memory, and run the computer instructions, to perform the method according to any one of the first aspect, the second aspect, the possible implementations of the first aspect, or the possible implementations of the second aspect.

According to a tenth aspect, this application provides a communication system, where the system includes the apparatus according to the third aspect and the apparatus according to the fourth aspect, or the system includes the first node according to the fifth aspect and the second node according to the sixth aspect.

### BRIEF DESCRIPTION OF DRAWINGS

FIG. 1 is a diagram of a network architecture according to an embodiment of this application;
FIG. 2 is a diagram of another network architecture according to an embodiment of this application;
FIG. 3 is a diagram of another network architecture according to an embodiment of this application;
FIG. 4 is a diagram of another network architecture according to an embodiment of this application;
FIG. 5 is a diagram of another network architecture according to an embodiment of this application;
FIG. 6 is a diagram of another network architecture according to an embodiment of this application;
FIG. 7 is a flowchart of a communication method according to an embodiment of this application;
FIG. 8 is a diagram of a group of signals according to an embodiment of this application;
FIG. 9 is a diagram of a frequency position of a local oscillator laser according to an embodiment of this application;
FIG. 10 is a diagram of a structure of a simplified coherent receiver according to an embodiment of this application;
FIG. 11 is a diagram of a structure of another simplified coherent receiver according to an embodiment of this application;
FIG. 12 is a diagram of a structure of a communication apparatus according to an embodiment of this application;
FIG. 13 is a diagram of a structure of another communication apparatus according to an embodiment of this application;
FIG. 14 is a diagram of a structure of a first node according to an embodiment of this application;
FIG. 15 is a diagram of a structure of a second node according to an embodiment of this application; and
FIG. 16 is a diagram of a structure of a communication system according to an embodiment of this application.

### DESCRIPTION OF EMBODIMENTS

The following further describes in detail embodiments of this application with reference to accompanying drawings.

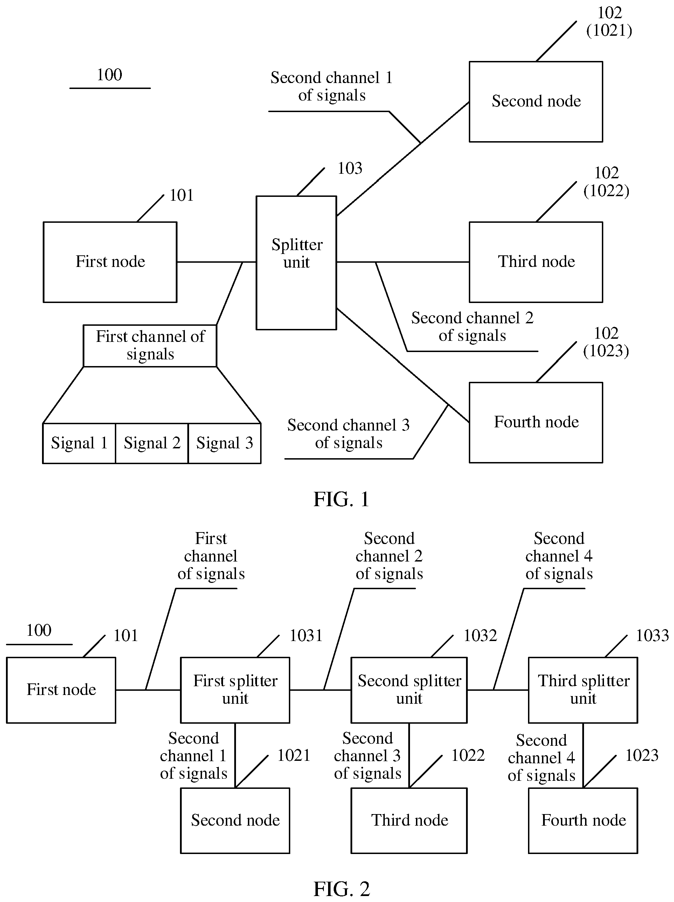

Refer to FIG. 1. An embodiment of this application provides a network architecture 100. The network architecture 100 includes a first node 101 and at least one leaf node 102, and the first node 101 is a central node.

The first node 101 communicates with the at least one leaf node 102. For example, the first node 101 sends a signal to any one of the at least one leaf node 102.

In some embodiments, the signal is an optical signal, and wavelengths of signals sent by the first node 101 to leaf nodes 102 may be different.

In some embodiments, the first node 101 is connected to the at least one leaf node 102 through an optical fiber. In this case, the first node 101 communicates with the at least one leaf node 102 through the optical fiber. Optionally, the first node 101 sends a signal to the at least one leaf node 102 through the optical fiber.

For example, as shown in FIG. 1, the at least one leaf node 102 includes a second node 1021, a third node 1022, and a fourth node 1023, and the first node 101 is connected to the second node 1021, the third node 1022, and the fourth node 1023 through optical fibers. The first node 101 sends a signal 1 to the second node 1021 through an optical fiber, sends a signal 2 to the third node 1022 through an optical fiber, and/or sends a signal 3 to the fourth node 1023 through an optical fiber, where the signal 1, the signal 2, and the signal 3 are optical signals with different wavelengths.

In some embodiments, the network architecture 100 may be a passive optical network (passive optical network, PON), the first node 101 is an optical line terminal (optical line terminal, OLT), and a leaf node in the network architecture 100 is an optical network unit (optical network unit, ONU). For example, the second node 1021, the third node 1022, and the fourth node 1023 are ONUs.

Refer to FIG. 1. The network architecture 100 further includes a splitter unit 103, and the first node 101 communicates with the at least one leaf node 102 by using the splitter unit 103.

The first node 101 generates a group of signals, where the group of signals includes at least one signal at consecutive positions, the at least one signal is in one-to-one correspondence with the at least one leaf node 102, and a signal corresponding to any leaf node 102 is a signal to be sent by the first node 101 to the leaf node 102. The first node 101 uses the group of signals as a first channel of signals, and sends the first channel of signals.

The splitter unit 103 receives the first channel of signals, and splits the first channel of signals into at least one second channel of signals, where the first channel of signals is the same as each second channel of signals, each second channel of signals includes the at least one signal, and the at least one second channel of signals is in one-to-one correspondence with the at least one leaf node 102. Transmit power of second channels of signals may be the same or different, but a sum of the transmit power of the second channels of signals may be equal to transmit power of the first channel of signals. The splitter unit 103 sends, to each leaf node 102, one second channel of signals corresponding to each leaf node 102.

For any one of the at least one leaf node 102, the leaf node 102 receives one second channel of signals, and obtains, from the second channel of signals, a signal corresponding to the leaf node 102.

For example, refer to FIG. 1. The first node 101 generates the group of signals, where the group of signals includes the signal 1 to be sent by the first node 101 to the second node 1021, the signal 2 to be sent to the third node 1022, and the signal 3 to be sent to the fourth node 1023. The first node 101 uses the group of signals as the first channel of signals, and sends the first channel of signals.

The splitter unit 103 receives the first channel of signals, and splits the first channel of signals into a second channel 1 of signals, a second channel 2 of signals, and a second channel 3 of signals. The second channel 1 of signals includes the signal 1, the signal 2, and the signal 3, the second channel 2 of signals includes the signal 1, the signal 2, and the signal 3, and the second channel 3 of signals includes the signal 1, the signal 2, and the signal 3. Transmit power of the second channel 1 of signals, transmit power of the second channel 2 of signals, and transmit power of the second channel 3 of signals may be the same or different, and a sum of the transmit power of the second channel 1 of signals, the transmit power of the second channel 2 of signals, and the transmit power of the second channel 3 of signals may be equal to the transmit power of the first channel of signals.

The splitter unit 103 sends the second channel 1 of signals to the second node 1021, sends the second channel 2 of signals to the third node 1022, and sends the second channel 3 of signals to the fourth node 1023. The second node 1021 receives the second channel 1 of signals, and obtains the signal 1 from the second channel 1 of signals. The third node 1022 receives the second channel 2 of signals, and obtains the signal 2 from the second channel 2 of signals. The fourth node 1023 receives the second channel 3 of signals, and obtains the signal 3 from the second channel 3 of signals.

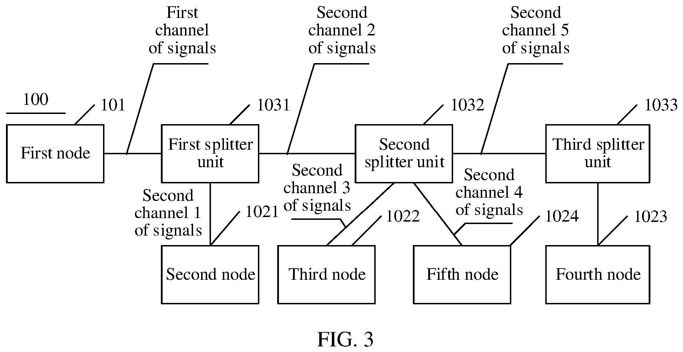

In some embodiments, refer to FIG. 2 or FIG. 3. A network architecture 100 may include a plurality of splitter units 103, where the plurality of splitter units 103 are connected in series, and any splitter unit 103 communicates with one or more leaf nodes 102.

For example, refer to FIG. 2 and FIG. 3. The network architecture 100 includes a first splitter unit 1031, a second splitter unit 1032, and a third splitter unit 1033, where the first splitter unit 1031, the second splitter unit 1032, and the third splitter unit 1033 are connected in series.

Refer to FIG. 2. The first splitter unit 1031 communicates with a second node 1021, the second splitter unit 1032 communicates with a third node 1022, and the third splitter unit 1033 communicates with a fourth node 1023. A first node 101 sends a first channel of signals. The first splitter unit 1031 splits the first channel of signals into a second channel 1 of signals and a second channel 2 of signals, sends the second channel 1 of signals to the second node 1021, and sends the second channel 2 of signals to the second splitter unit 1032. The second splitter unit 1032 splits the second channel 2 of signals into a second channel 3 of signals and a second channel 4 of signals, sends the second channel 3 of signals to the third node 1022, and sends the second channel 4 of signals to the third splitter unit 1033. Then, the third splitter unit 1033 sends the second channel 4 of signals to the fourth node 1023. Alternatively,
refer to FIG. 3. The first splitter unit 1031 communicates with a second node 1021, the second splitter unit 1032 communicates with a third node 1022 and a fifth node 1024, and the third splitter unit 1033 communicates with a fourth node 1023. A first node 101 sends a first channel of signals. The first splitter unit 1031 splits the first channel of signals into a second channel 1 of signals and a second channel 2 of signals, sends the second channel 1 of signals to the second node 1021, and sends the second channel 2 of signals to the second splitter unit 1032. The second splitter unit 1032 splits the second channel 2 of signals into a second channel 3 of signals, a second channel 4 of signals, and a second channel 5 of signals, sends the second channel 3 of signals to the third node 1022, sends the second channel 4 of signals to the fifth node 1024, and sends the second channel 5 of signals to the third splitter unit 1033. Then, the third splitter unit 1033 sends the second channel 5 of signals to the fourth node 1023.

Optionally, for the third splitter unit 1033 in FIG. 2 or FIG. 3, a splitter unit may be further connected in series after the third splitter unit 1033.

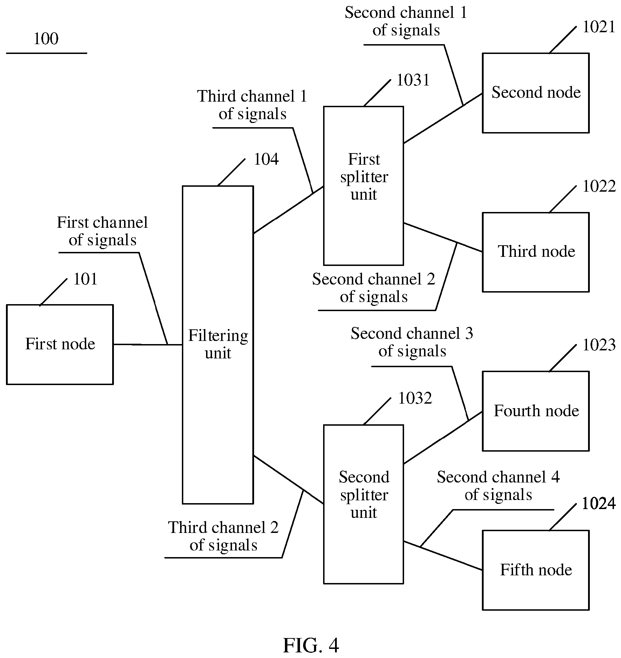

In some embodiments, refer to FIG. 4. A filtering unit 104 is further disposed on a path from a first node 101 to each leaf node 102, the first node 101 communicates with the filtering unit 104, the filtering unit 104 further communicates with a plurality of splitter units 103, and each splitter unit 103 communicates with at least one leaf node 102.

The filtering unit 104 includes a plurality of filtering egresses, and each splitter unit 103 is connected to one filtering egress of the filtering unit 104.

The first node 101 may generate a plurality of groups of signals, where each group of signals includes at least one signal, the plurality of groups of signals are used as a first channel of signals, and a guard interval exists between any two adjacent groups of signals in the first channel of signals. The first node 101 sends the first channel of signals to the filtering unit 104.

The filtering unit 104 splits the first channel of signals into a plurality of third channels of signals at guard intervals of the first channel of signals. Each third channel of signals is a group of signals in the first channel of signals, and the plurality of third signals are in one-to-one correspondence with the plurality of splitter units 103. A third channel of signals corresponding to each splitter unit 103 is sent to each splitter unit 103.

For any one of the plurality of splitter units 103, the splitter unit 103 receives a third channel of signals corresponding to the splitter unit 103, and splits the third channel of signals into at least one second channel of signals. The third channel of signals is the same as each second channel of signals, transmit power of second channels of signals may be the same or different, and transmit power of the third channel of signals may be equal to a sum of the transmit power of the second channels of signals. For at least one leaf node 102 communicating with the splitter unit 103, the at least one second channel of signals is in one-to-one correspondence with the at least one leaf node 102, and the splitter unit 103 sends, to each leaf node 102, a second channel of signals corresponding to each leaf node 102.

For example, refer to FIG. 4. The first node 101 sends the first channel of signals to the filtering unit 104, where the first channel of signals includes a first group of signals and a second group of signals, a guard interval exists between the first group of signals and the second group of signals, the first group of signals includes a signal 1 and a signal 2, and the second group of signals includes a signal 3 and a signal 4. The signal 1 is a signal to be sent by the first node 101 to a second node 1021, the signal 2 is a signal to be sent by the first node 101 to a third node 1022, the signal 3 is a signal to be sent by the first node 101 to a fourth node 1023, and the signal 4 is a signal to be sent by the first node 101 to a fifth node 1024.

The filtering unit 104 receives the first channel of signals, and splits the first channel of signals into a third channel 1 of signals and a third channel 2 of signals at the guard interval, where the third channel 1 of signals includes the first group of signals, that is, the third channel 1 of signals includes the signal 1 and the signal 2, and the third channel 2 of signals includes the second group of signals, that is, the third channel 2 of signals includes the signal 3 and the signal 4. The filtering unit 104 sends the third channel 1 of signals to a first splitter unit 1031, and sends the third channel 2 of signals to a second splitter unit 1032.

The first splitter unit 1031 receives the third channel 1 of signals, and splits the third channel 1 of signals into a second channel 1 of signals and a second channel 2 of signals, where the second channel 1 of signals includes the signal 1 and the signal 2, and the second channel 2 of signals includes the signal 1 and the signal 2. The first splitter unit 1031 sends the second channel 1 of signals to the second node 1021, and sends the second channel 2 of signals to the third node 1022.

The second splitter unit 1032 receives the third channel 2 of signals, and splits the third channel 2 of signals into a second channel 3 of signals and a second channel 4 of signals, where the second channel 3 of signals includes the signal 3 and the signal 4, and the second channel 4 of signals includes the signal 3 and the signal 4. The second splitter unit 1032 sends the second channel 3 of signals to the fourth node 1023, and sends the second channel 4 of signals to the fifth node 1024.

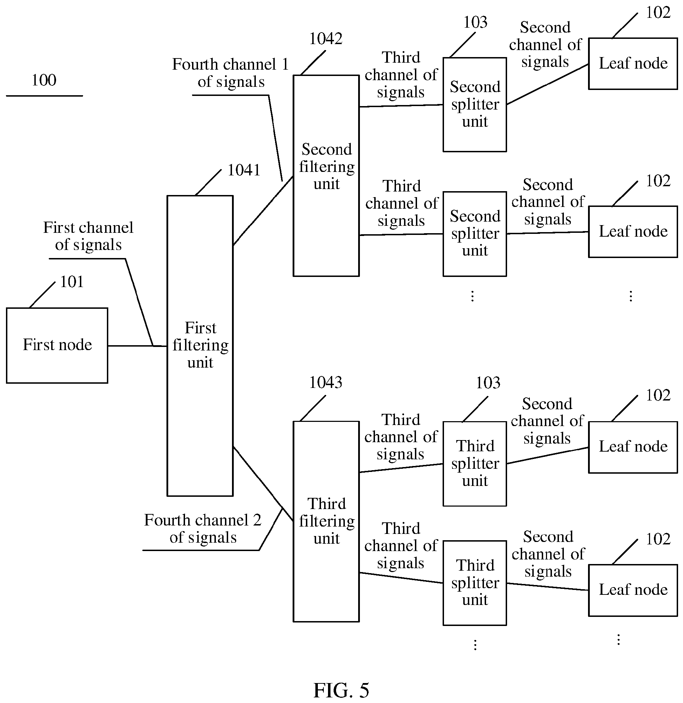

In some embodiments, refer to FIG. 5. A plurality of filtering units 104 are disposed on a path from a first node 101 to each leaf node 102, and the plurality of filtering units 104 are cascaded. The plurality of filtering units 104 collaboratively split each group of signals in a first channel of signals.

For example, refer to FIG. 5. The plurality of filtering units 104 include a first filtering unit 1041, a second filtering unit 1042, and a third filtering unit 1043. The first node 101 communicates with the first filtering unit 1041, and the first filtering unit 1041 further communicates with the second filtering unit 1042 and the third filtering unit 1043. The second filtering unit 1042 further communicates with a plurality of second splitter units 1032, and each second splitter unit 1032 further communicates with at least one leaf node 102. The third filtering unit 1043 further communicates with a plurality of third splitter units 1033, and each third splitter unit 1033 further communicates with at least one leaf node 102.

In the network architecture 100 shown in FIG. 5, the first node 101 sends the first channel of signals, where the first channel of signals includes a plurality of groups of signals, and a guard interval exists between two adjacent groups of signals. The first filtering unit 1041 splits the first channel of signals into a fourth channel 1 of signals and a fourth channel 2 of signals at a specific guard interval of the first channel of signals, where the fourth channel 1 of signals includes a plurality of groups of signals, a guard interval exists between two adjacent groups of signals in the fourth channel 1 of signals, the fourth channel 2 of signals includes a plurality of groups of signals, and a guard interval exists between two adjacent groups of signals in the fourth channel 2 of signals. The first filtering unit 1041 sends the fourth channel 1 of signals to the second filtering unit 1042, and sends the fourth channel 2 of signals to the third filtering unit 1043.

The second filtering unit 1042 receives the fourth channel 1 of signals, and splits the fourth channel 1 of signals into a plurality of third channels of signals, where each third channel of signals includes a group of signals, and the plurality of third channels of signals are in one-to-one correspondence with the plurality of second splitter units 1032. The second filtering unit 1042 sends, to each second splitter unit 1032, a third channel of signals corresponding to each second splitter unit 1032. For any second splitter unit 1032, the second splitter unit 1032 receives a third channel of signals corresponding to the second splitter unit 1032, and splits the third channel of signals into at least one second channel of signals, where the at least one second channel of signals is in one-to-one correspondence with at least one leaf node 102 communicating with the second splitter unit 1032. The second splitter unit 1032 sends, to each leaf node 102, a second channel of signals corresponding to each leaf node 102.

The third filtering unit 1043 receives the fourth channel 2 of signals, and splits the fourth channel 2 of signals into a plurality of third channels of signals, where each third channel of signals includes a group of signals, and the plurality of third channels of signals are in one-to-one correspondence with the plurality of third splitter units 1033 communicating with the third filtering unit 1043. The third filtering unit 1043 sends, to each third splitter unit 1033, a third channel of signals corresponding to each third splitter unit 1033. For any third splitter unit 1033, the third splitter unit 1033 receives a third channel of signals corresponding to the third splitter unit 1033, and splits the third channel of signals into at least one second channel of signals, where the at least one second channel of signals is in one-to-one correspondence with at least one leaf node 102 communicating with the third splitter unit 1033. The third splitter unit 1033 sends, to each leaf node 102, a second channel of signals corresponding to each leaf node 102.

FIG. 5 merely lists an implementation in which a plurality of filtering units 104 are cascaded. It is clear that the plurality of filtering units 104 may alternatively be cascaded in another implementation. This is not listed one by one herein.

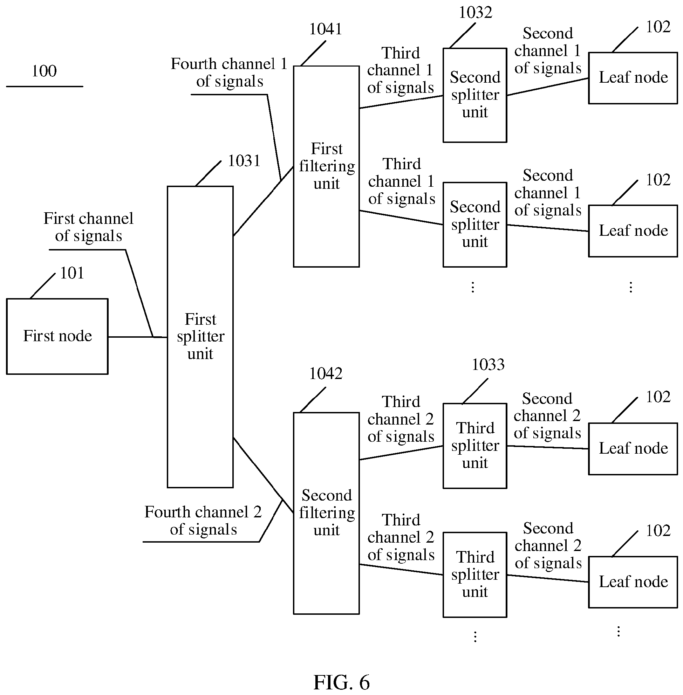

In some embodiments, refer to FIG. 6. A splitter unit 103 is cascaded with a plurality of filtering units 104 on a path from a first node 101 to each leaf node 102. The splitter unit 103 and the plurality of filtering units 104 collaboratively split each group of signals in a first channel of signals.

For example, refer to FIG. 6. For a first splitter unit 1031, a first filtering unit 1041, and a second filtering unit 1042, the first node 101 communicates with the first splitter unit 1031, and the first splitter unit 1031 further communicates with the first filtering unit 1041 and the second filtering unit 1042. The first filtering unit 1041 further communicates with a plurality of second splitter units 1032, and each second splitter unit 1032 further communicates with at least one leaf node 102. The second filtering unit 1042 further communicates with a plurality of third splitter units 1033, and each third splitter unit 1033 further communicates with at least one leaf node 102.

In the network architecture 100 shown in FIG. 6, the first node 101 sends the first channel of signals, where the first channel of signals includes a plurality of groups of signals, and a guard interval exists between two adjacent groups of signals. The first splitter unit 1031 splits the first channel of signals into a fourth channel 1 of signals and a fourth channel 2 of signals, where both the fourth channel 1 of signals and the fourth channel 2 of signals are the same as the first channel of signals, and transmit power of the first channel of signals may be equal to a sum of transmit power of the fourth channel 1 of signals and transmit power of the fourth channel 2 of signals. The first splitter unit 1031 sends the fourth channel 1 of signals to the first filtering unit 1041, and sends the fourth channel 2 of signals to the second filtering unit 1042.

The first filtering unit 1041 receives the fourth channel 1 of signals, and splits the fourth channel 1 of signals into a plurality of third channels of signals, where each third channel of signals includes a group of signals, and the plurality of third channels 1 of signals are in one-to-one correspondence with the plurality of second splitter units 1032 communicating with the first filtering unit 1041. The first filtering unit 1041 sends, to each second splitter unit 1032, a third channel 1 of signals corresponding to each second splitter unit 1032. For any second splitter unit 1032, the second splitter unit 1032 receives a third channel 1 of signals corresponding to the second splitter unit 1032, and splits the third channel 1 of signals into at least one second channel 1 of signals, where the at least one second channel 1 of signals is in one-to-one correspondence with at least one leaf node 102 communicating with the second splitter unit 1032. The second splitter unit 1032 sends, to each leaf node 102, a second channel 1 of signals corresponding to each leaf node 102.

The second filtering unit 1042 receives the fourth channel 2 of signals, and splits the fourth channel 2 of signals into a plurality of third channels 2 of signals, where each third channel 2 of signals includes a group of signals, and the plurality of third channels 2 of signals are in one-to-one correspondence with the plurality of third splitter units 1033 communicating with the second filtering unit 1042. The second filtering unit 1042 sends, to each third splitter unit 1033, a third channel 2 of signals corresponding to each third splitter unit 1033. For any third splitter unit 1033, the third splitter unit 1033 receives a third channel 2 of signals corresponding to the third splitter unit 1033, and splits the third channel 2 of signals into at least one second channel 2 of signals, where the at least one second channel 2 of signals is in one-to-one correspondence with at least one leaf node 102 communicating with the third splitter unit 1033. The third splitter unit 1033 sends, to each leaf node 102, a second channel 2 of signals corresponding to each leaf node 102.

In some embodiments, the splitter unit 103 may be a splitter or the like, and the filtering unit 104 may be a filter or the like.

For any leaf node 102 in the network architecture 100, the leaf node 102 includes a coherent receiver. The leaf node 102 receives a second channel of signals, and obtains, from the second channel of signals by using the coherent receiver, a signal corresponding to the leaf node 102. The coherent receiver is a simplified coherent receiver. The simplified coherent receiver has a simple structure and low costs. To enable the leaf node 102 to receive a signal by using the simplified coherent receiver, the first node 101 generates a signal generated according to any one of the following embodiments and sends the signal to the leaf node 102, so that the leaf node 102 can receive the signal by using the simplified coherent receiver.

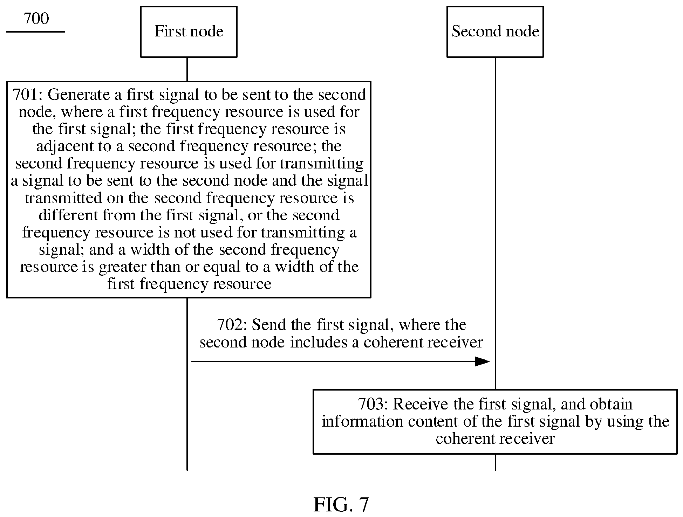

Refer to FIG. 7. An embodiment of this application provides a communication method 700. The communication method 700 may be applied to the network architecture 100 shown in FIG. 1, FIG. 2, FIG. 3, FIG. 4, FIG. 5, or FIG. 6. The method 700 includes the following step 701 to step 703.

Step 701: A first node generates a first signal to be sent to a second node, where a first frequency resource is used for the first signal; the first frequency resource is adjacent to a second frequency resource; the second frequency resource is used for transmitting a signal to be sent to the second node and the signal transmitted on the second frequency resource is different from the first signal, or the second frequency resource is not used for transmitting a signal; and a width of the second frequency resource is greater than or equal to a width of the first frequency resource.

The first frequency resource carries information content of the first signal.

In some embodiments, the first node communicates with at least one first leaf node, and the second node is any one of the at least one first leaf node. The first node generates at least one to-be-sent signal, where the at least one signal is in one-to-one correspondence with the at least one first leaf node. For any one of the at least one signal and for a leaf node corresponding to the any signal, the any signal is a signal to be sent to the leaf node.

For ease of description, the at least one signal is referred to as a first group of signals. Because the at least one leaf node includes the second node, the first group of signals includes the first signal.

In some embodiments, the first group of signals further includes a second signal, the second signal is a signal to be sent by the first node to a third node, and the at least one first leaf node includes the third node. In the first group of signals, the first signal is adjacent to the second signal; a third frequency resource is used for the second signal; the third frequency resource is adjacent to a fourth frequency resource; the fourth frequency resource is used for transmitting a signal of the third node and the signal transmitted on the fourth frequency resource is different from the second signal, or the fourth frequency resource is not used for transmitting a signal; and a width of the fourth frequency resource is greater than or equal to a width of the third frequency resource.

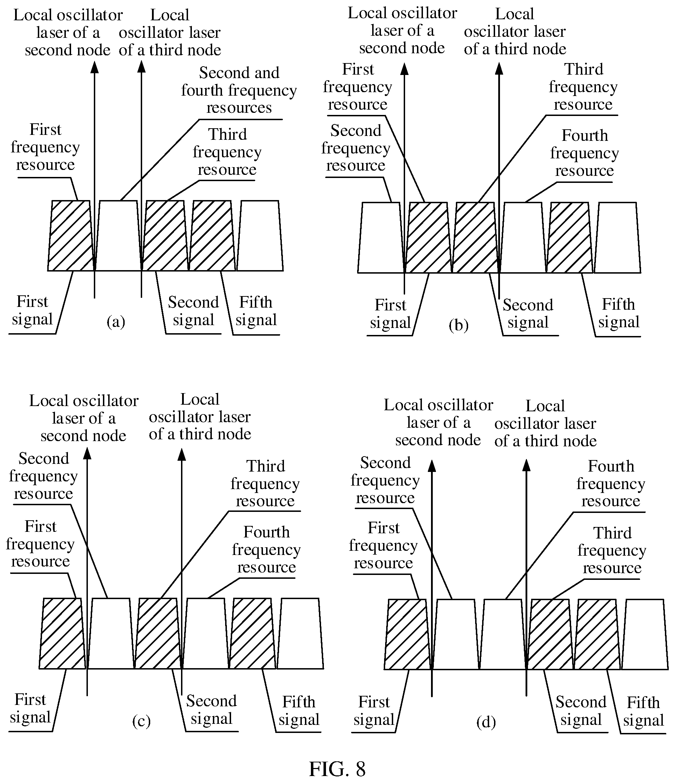

The foregoing merely lists an example in which the first group of signals includes the first signal, or the first group of signals includes the first signal and the second signal. During actual implementation, the first group of signals may further include more signals. For example, refer to FIG. 8. The first group of signals includes three signals.

The first signal and the second signal are any two adjacent signals in the first group of signals. In some embodiments, the second frequency resource and the fourth frequency resource overlap. For example, refer to FIG. 8(a). The second frequency resource and the fourth frequency resource completely overlap, in other words, the second frequency resource and the fourth frequency resource are a same frequency resource. Alternatively, the second frequency resource and the fourth frequency resource partially overlap. An overlapping frequency resource is a frequency resource shared by the first signal and the second signal. In this way, frequency resource utilization can be improved. Alternatively, in some embodiments, the second frequency resource and the fourth frequency resource do not overlap. Refer to FIG. 8(b). The second frequency resource and the fourth frequency resource are spaced by the first frequency resource and the third frequency resource. Alternatively, refer to FIG. 8(c). The second frequency resource and the fourth frequency resource are spaced by the third frequency resource. Alternatively, refer to FIG. 8(d). The second frequency resource is adjacent to the fourth frequency resource, and the first frequency resource and the third frequency resource are spaced by the second frequency resource and the fourth frequency resource.

The second frequency resource may be used in the following two manners: Manner 1 and Manner 2.

Manner 1: The second frequency resource is not used for transmitting any signal, in other words, the second frequency resource is not used for transmitting a signal.

Manner 2: The first node further generates a third signal, where the third signal is also a signal to be sent by the first node to the second node, and a frequency resource used for the third signal is the second frequency resource. An information amount of the third signal is less than an information amount of the first signal, or transmit power of the third signal is less than transmit power of the first signal.

In Manner 2, the information amount of the third signal may be far less than the information amount of the first signal. For example, the information amount of the third signal is less than 1/n of the information amount of the first signal, and n is an integer greater than 1. For example, n is an integer like 4, 5, 6, or 7.

The first group of signals further includes the third signal.

For the first frequency resource used for the first signal and the second frequency resource adjacent to the first frequency resource, the first frequency resource includes one or more subcarriers, and the second frequency resource also includes one or more subcarriers. For example, the first frequency resource includes one subcarrier, and the second frequency resource includes one subcarrier. Alternatively, for another example, the first frequency resource includes two subcarriers, and the second frequency resource includes two subcarriers. Alternatively, for still another example, the first frequency resource includes three subcarriers, and the second frequency resource includes four subcarriers. Therefore, a quantity of subcarriers included in the frequency resource is not limited herein.

For a structure of a frequency resource used for another signal in the first group of signals, refer to the foregoing structure of the frequency resource used for the first signal. Details are not described herein again.

When a filtering unit is further disposed on a path from the first node to a leaf node in the network architecture 100, the first node may generate a plurality of groups of signals, and combine the plurality of groups of signals into a first channel of signals, where a guard interval exists between two adjacent groups of signals in the first channel of signals. Optionally, the guard interval is a frequency interval.

For example, the first node further communicates with at least one second leaf node, and the first node generates a second group of signals, where the second group of signals includes at least one signal, and the at least one signal in the second group of signals is in one-to-one correspondence with the at least one second leaf node. For any signal in the second group of signals and a second leaf node corresponding to the signal, the signal is a signal to be sent by the first node to the second leaf node.

A structure of a frequency resource used for each signal in the second group of signals is the same as the structure of the frequency resource used for the first signal in the first group of signals. For example, for any signal in the second group of signals, for ease of description, the any signal is referred to as a fourth signal, a fifth frequency resource used for the fourth signal is adjacent to a sixth frequency resource, the sixth frequency resource is used for transmitting a signal of a fourth node or is not used for transmitting a signal, and a width of the sixth frequency resource is greater than or equal to a width of the fifth frequency resource.

The first node combines the first group of signals and the second group of signals into the first channel of signals, and a guard interval exists between the first group of signals and the second group of signals in the first channel of signals.

Optionally, the first node may further generate a third group of signals, a fourth group of signals, a fifth group of signals, and/or the like. The first channel of signals may further include the third group of signals, the fourth group of signals, the fifth group of signals, and/or the like. A guard interval exists between any two adjacent groups of signals in the first channel of signals.

Step 702: The first node sends the first signal to the second node, where the second node includes a coherent receiver.

In step 702, the first node sends the first channel of signals.

In some embodiments, refer to FIG. 1, FIG. 2, or FIG. 3. The first node sends the first channel of signals to a splitter unit communicating with at least one leaf node in the network architecture 100. The first channel of signals includes the first group of signals. The splitter unit receives the first channel of signals sent by the first node, and splits the first channel of signals into at least one second channel of signals, where each second channel of signals is the same as the first channel of signals, and a sum of transmit power of second channels of signals may be equal to transmit power of the first channel of signals. The splitter unit sends, to each leaf node, a second channel of signals corresponding to each leaf node.

In some embodiments, refer to FIG. 4, FIG. 5, or FIG. 6. A filtering unit is disposed on a path from the first node to a leaf node in the network architecture 100. The first channel of signals includes a plurality of groups of signals, and a guard interval exists between two adjacent groups of signals. The filtering unit receives the first channel of signals sent by the first node, and splits the first channel of signals at a guard interval included in the first channel of signals to obtain a plurality of third channels of signals, where each third channel of signals includes a group of signals. The plurality of third channels of signals are in one-to-one correspondence with a plurality of splitter units, and the filtering unit sends, to each splitter unit, a third channel of signals corresponding to each splitter unit. For any one of the plurality of splitter units, the splitter unit receives a third channel of signals, and splits the third channel of signals into at least one second channel of signals, where each second channel of signals is the same as the third channel of signals, and a sum of transmit power of second channels of signals may be equal to transmit power of the third channel of signals. The splitter unit sends, to each leaf node, a second channel of signals corresponding to each leaf node.

Step 703: The second node receives the first signal, and obtains the information content of the first signal by using the coherent receiver.

In step 703, the second node receives a second channel of signals, where the second channel of signals includes the first signal; and obtains the first signal from the second channel of signals by using the coherent receiver.

Optionally, the second channel of signals further includes the third signal.

The second node generates a local oscillator laser, where the local oscillator laser is a laser signal used by the second node to receive the first signal. Frequency of the local oscillator laser is within a range from first frequency to second frequency, the first frequency is frequency at a junction of the first frequency resource and the second frequency resource, the second frequency is intermediate frequency of a first target frequency resource, and the first target frequency resource includes the first frequency resource and the second frequency resource.

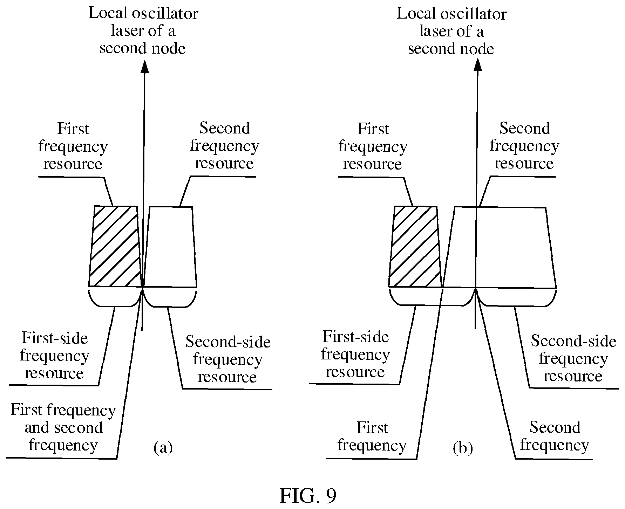

Refer to FIG. 9a. When the width of the first frequency resource is equal to the width of the second frequency resource, the frequency at the junction of the first frequency resource and the second frequency resource is equal to the intermediate frequency of the first target frequency resource. In this case, the first frequency is equal to the second frequency. Alternatively, refer to FIG. 9b. When the width of the first frequency resource is less than the width of the second frequency resource, the frequency at the junction of the first frequency resource and the second frequency resource is not equal to the intermediate frequency of the first target frequency resource. In this case, the first frequency is not equal to the second frequency. Therefore, the frequency of the local oscillator laser is the frequency at the junction of the first frequency resource and the second frequency resource, or the frequency of the local oscillator laser is frequency in the second frequency resource.

The coherent receiver included in the second node is a simplified coherent receiver, and the second node obtains the first signal from the second channel of signals by using the simplified coherent receiver. During implementation,
the simplified coherent receiver of the second node determines a first-side frequency resource and a second-side frequency resource based on the local oscillator laser generated by the second node, where the first-side frequency resource and the second-side frequency resource are symmetric with the frequency of the local oscillator laser as a center, a width of the first-side frequency resource and a width of the second-side frequency resource are both a specified width, the specified width is greater than or equal to the width of the first frequency resource, and the specified width is less than or equal to a half of a width of the first target frequency resource. The first-side frequency resource includes the first frequency resource, and the second-side resource includes all or a part of the second frequency resource. The simplified coherent receiver of the second node obtains mixed information content from the second channel of signals, where the mixed information content is a mixture of information content of a first-side signal transmitted on the first-side frequency resource and information content of a second-side signal transmitted on the second-side frequency resource. A indicates the first-side signal transmitted on the first-side frequency resource, B indicates the second-side signal transmitted on the second-side frequency resource, and the mixed information content is a mixture of information content of A and information content of B.

When the second frequency resource is used in Manner 1, because the second frequency resource is not used for transmitting any signal, the second-side signal on the second-side frequency resource is 0. The mixed information content obtained by the coherent receiver of the second node is the information content of the first signal.

When the second frequency resource is used in Manner 2, the second frequency resource is used for transmitting the third signal, the first-side signal on the first-side frequency resource includes the first signal, and the second-side signal on the second-side frequency resource includes the third signal. The mixed information content is a mixture of the information content of the first signal and information content of the second signal. Because the information amount of the third signal transmitted on the second frequency resource is less than the information amount of the first signal, or because the transmit power of the third signal transmitted on the second frequency resource is less than the transmit power of the first signal, the second node may distinguish between the information content of the first signal and the information content of the third signal.

Refer to FIG. 9a. When the frequency of the local oscillator laser is the frequency at the junction of the first frequency resource and the second frequency resource, the first-side frequency resource includes the first frequency resource, and the second-side resource includes the second frequency resource or a part of the second frequency resource. Alternatively, refer to FIG. 9b. When the frequency of the local oscillator laser is the frequency in the second frequency resource, the width of the first frequency resource is less than the width of the second frequency resource, the first-side frequency resource includes the first frequency resource and a part of a frequency resource in the second frequency resource, and the second-side frequency resource includes a part of a frequency resource in the second frequency resource.

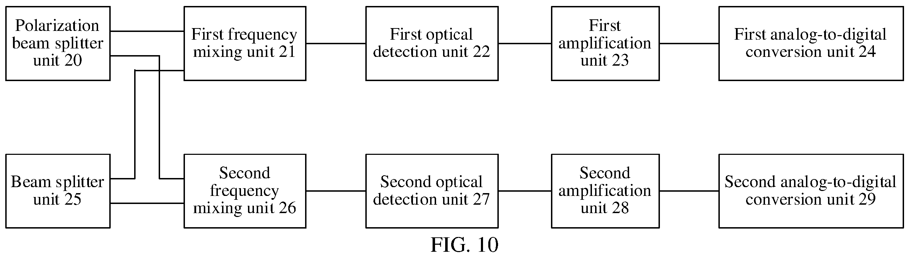

The following lists an instance of the simplified coherent receiver. Refer to FIG. 10. The simplified coherent receiver includes a polarization beam splitter unit 20, a first frequency mixing unit 21, a first optical detection unit 22, a first amplification unit 23, a first analog-to-digital conversion unit 24, a beam splitter unit 25, a second frequency mixing unit 26, a second optical detection unit 27, a second amplification unit 28, and a second analog-to-digital conversion unit 29.

The polarization beam splitter unit 20 is configured to: split the second channel of signals received by the second node into an X-polarization signal of the second channel of signals and a Y-polarization signal of the second channel of signals, input the X-polarization signal to the first frequency mixing unit 21, and input the Y-polarization signal to the second frequency mixing unit 26.

The beam splitter unit 25 is configured to: split the local oscillator laser generated by the second node into a first local oscillator laser and a second local oscillator laser, input the first local oscillator laser to the first frequency mixing unit 21, and input the second local oscillator laser to the second frequency mixing unit 26, where both frequency of the first local oscillator laser and frequency of the second local oscillator laser are equal to the frequency of the local oscillator laser.

The first frequency mixing unit 21 is configured to: determine, by using the frequency of the first local oscillator laser as a center, the first-side frequency resource and the second-side frequency resource that are located on two sides of the center; obtain a first target signal from the X-polarization signal, where the first target signal includes an X-polarization component of the first-side signal transmitted on the first-side frequency resource and an X-polarization component of the second-side signal transmitted on the second-side frequency resource; and input the first target signal to the first optical detection unit 22. A type of the first target signal is an optical signal, the X-polarization component of the first-side signal is indicated by A1, the X-polarization component of the second-side signal is indicated by B1, and the first target signal includes A1 and B1.

The first optical detection unit 22 is configured to: obtain a first mixed signal based on the first target signal, where the first mixed signal is a mixture of A1 and B1, a type of the first mixed signal is an electrical signal, and the first mixed signal may be indicated as k(A1+B1*); and input the first mixed signal to the first amplification unit 23, where B1* is a conjugate of B1, and k is a coefficient generated by the simplified coherent receiver.

The first amplification unit 23 is configured to: amplify the first mixed signal, and input an amplified first mixed signal to the first analog-to-digital conversion unit 24.

The first analog-to-digital conversion unit 24 is configured to convert the amplified first mixed signal into a first digital signal, where the first digital signal includes information content of the first mixed signal, and the information content includes information content of A1 and information content of B1.

The second frequency mixing unit 26 is configured to: determine, by using the frequency of the second local oscillator laser as a center, the first-side frequency resource and the second-side frequency resource that are located on two sides of the center; obtain a second target signal from the Y-polarization signal, where the second target signal includes a Y-polarization component of the first-side signal transmitted on the first-side frequency resource and a Y-polarization component of the second-side signal transmitted on the second-side frequency resource; and input the second target signal to the second optical detection unit 27. A type of the second target signal is an optical signal, the Y-polarization component of the first-side signal is indicated by A2, the Y-polarization component of the second-side signal is indicated by B2, and the second target signal includes A2 and B2.

The second optical detection unit 27 is configured to: obtain a second mixed signal based on the second target signal, where the second mixed signal is a mixture of A2 and B2, a type of the second mixed signal is an electrical signal, and the second mixed signal may be indicated as k(A2+B2*); and input the second mixed signal to the second amplification unit 28, where B2* is a conjugate of B2.

The second amplification unit 28 is configured to: amplify the second mixed signal, and input an amplified second mixed signal to the second analog-to-digital conversion unit 29.

The second analog-to-digital conversion unit 29 is configured to convert the amplified second signal into a second digital signal, where the second digital signal includes information content of the second mixed signal, and the information content includes information content of A2 and information content of B2.

When the second frequency resource is used in Manner 1, because the second frequency resource is not used for transmitting any signal, in other words, the second-side frequency resource is not used for transmitting a signal, both the information content of B1 and the information content of B2 are 0. The second node performs digital signal processing on the first digital signal and the second digital signal to obtain the information content of the first signal.

When the second frequency resource is used in Manner 2, the second frequency resource is used for transmitting the third signal, the information content of the second-side signal is the information content of the third signal, and the information content of the third signal includes the information content of B1 and the information content of B2.

Because the information amount of the third signal transmitted on the second frequency resource is less than the information amount of the first signal, impact of the third signal on the first signal is small. Alternatively, the transmit power of the third signal transmitted on the second frequency resource is less than the transmit power of the first signal, the second node performs digital signal processing on the first digital signal and the second digital signal, to separately obtain the information content of the first-side signal and the information content of the second-side signal, where the information content of the first-side signal includes the information content of the first signal, and the second-side signal includes the information content of the third signal.

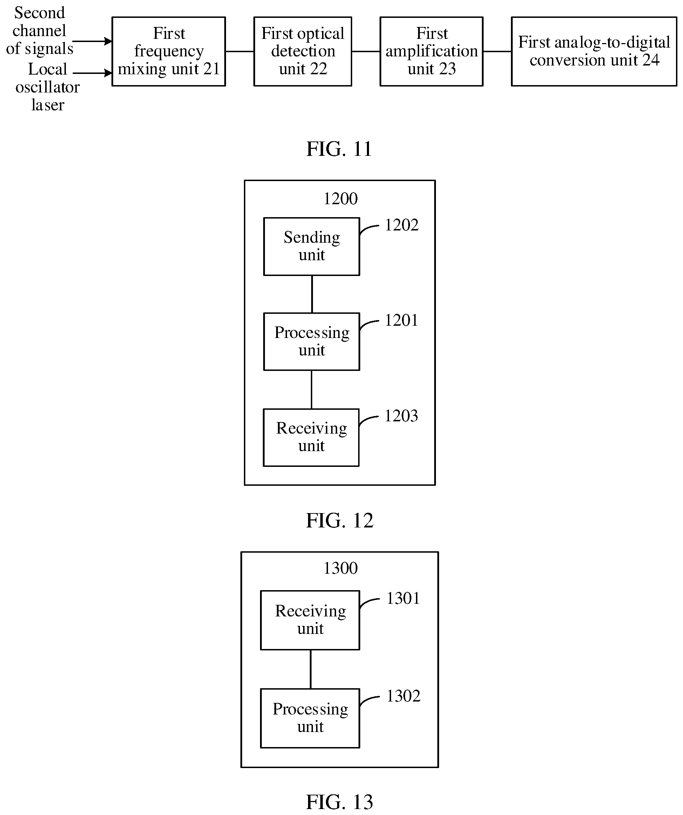

The following lists another instance of the simplified coherent receiver. Refer to FIG. 11. The simplified coherent receiver includes a first frequency mixing unit 21, a first optical detection unit 22, a first amplification unit 23, and a first analog-to-digital conversion unit 24. The first frequency mixing unit 21 obtains the second channel of signals received by the second node and the local oscillator laser generated by the second node. Then, the first frequency mixing unit 21, the first optical detection unit 22, the first amplification unit 23, and the first analog-to-digital conversion unit 24 obtain the information content of the first signal from the second channel of signals. For a detailed implementation process, refer to the processing processes of the first frequency mixing unit 21, the first optical detection unit 22, the first amplification unit 23, and the first analog-to-digital conversion unit 24 in FIG. 10. Details are not described herein again.

For the first frequency resource used for the first signal and the second frequency resource adjacent to the first frequency resource, the first frequency resource is used for transmitting the first signal, the second frequency resource is used for transmitting a signal to be sent to the second node or is not used for transmitting a signal, the second frequency resource is not used for transmitting information content of a signal sent to another node, and the width of the second frequency resource is greater than or equal to the width of the first frequency resource, so that the second node can obtain the information content of the first signal from the second channel of signals received by the second node by using a low-cost simplified coherent receiver. In this way, communication costs are reduced.

For another leaf node in the network architecture 100 other than the first node, an operation of obtaining information content by the another leaf node is the same as that of the second node. Details are not described herein.

A leaf node in the network architecture 100 may also send a signal to the first node. During implementation,
the second node generates a fifth signal, where the fifth signal is transmitted on a seventh frequency resource, a conjugate signal of the fifth signal is transmitted on an eighth frequency resource adjacent to the seventh frequency resource, and a width of the seventh frequency resource is less than or equal to a width of the eighth frequency resource; and sends the fifth signal to the first node.

The third node generates a sixth signal, where the sixth signal is transmitted on a ninth frequency resource, the ninth frequency resource is adjacent to the eighth frequency resource, a conjugate signal of the sixth signal is transmitted on the eighth frequency resource, and a width of the ninth frequency resource is less than or equal to the width of the eighth frequency resource; and sends the sixth signal to the first node.

The first node includes a standard coherent receiver, and receives the fifth signal and the sixth signal by using the standard coherent receiver.

The fifth signal and the sixth signal share the eighth frequency resource. This improves the frequency resource utilization.

In some embodiments, the second node includes a simplified transmitter, the second node sends the fifth signal by using the simplified transmitter, the third node includes a simplified transmitter, and the third node sends the sixth signal by using the simplified transmitter. The simplified transmitter has a simple structure and low costs, and therefore communication costs are reduced.

Frequency of a transmit laser of the second node is within a range from third frequency to fourth frequency, the third frequency is frequency at a junction of the seventh frequency resource and the eighth frequency resource, the fourth frequency is intermediate frequency of a second target frequency resource, the second target frequency resource includes the seventh frequency resource and the eighth frequency resource, and the transmit laser is a laser signal used by the second node to send the fifth signal.

Frequency of a transmit laser of the third node is within a range of fifth frequency to sixth frequency, the fifth frequency is frequency at a junction of the eighth frequency resource and the ninth frequency resource, the sixth frequency is intermediate frequency of a third target frequency resource, the third target frequency resource includes the eighth frequency resource and the ninth frequency resource, and the transmit laser is a laser signal used by the second node to send the sixth signal.

In some embodiments, the frequency resource may also be referred to as a spectrum resource.

In this embodiment of this application, the first node generates the first signal, where the first frequency resource used for the first signal is adjacent to the second frequency resource; the second frequency resource is used for transmitting a signal to be sent to the second node, or the second frequency resource is not used for transmitting a signal; and the width of the second frequency resource is greater than or equal to the width of the first frequency resource. In this case, when the second node receives the first signal by using the simplified coherent receiver, the signal on the second frequency resource does not affect receiving of the first signal on the first frequency resource by the simplified coherent receiver, so that the second node can receive a signal by using the simplified coherent receiver. The simplified coherent receiver has a simple structure and low costs, and therefore the communication costs are reduced. In addition, for the first group of signals including the first signal, the first group of signals includes the second signal; the third frequency resource used for the second signal is adjacent to the fourth frequency resource; the fourth frequency resource is used for transmitting a signal to be sent to the third node, or the fourth frequency resource is not used for transmitting a signal; and the width of the fourth frequency resource is greater than or equal to the width of the third frequency resource. The first signal is adjacent to the second signal, and the second frequency resource and the fourth frequency resource overlap in frequency. In this way, overlapping frequency may be shared by the first signal and the second signal, to improve the frequency resource utilization.

Refer to FIG. 12. An embodiment of this application provides a communication apparatus 1200. The apparatus 1200 is deployed on the foregoing first node, where the first node may be the first node in the network architecture 100 shown in FIG. 1, FIG. 2, FIG. 3, FIG. 4, FIG. 5, or FIG. 6, or may be the first node in the method 700 shown in FIG. 7; and includes:
a processing unit 1201, configured to generate a first signal to be sent to a second node, where a first frequency resource is used for the first signal; the first frequency resource is adjacent to a second frequency resource; the second frequency resource is used for transmitting a signal of the second node and the signal transmitted on the second frequency resource is different from the first signal, or the second frequency resource is not used for transmitting a signal; and a width of the second frequency resource is greater than or equal to a width of the first frequency resource; and
a sending unit 1202, configured to send the first signal.

Optionally, for a detailed implementation process of generating the first signal by the processing unit 1201, refer to related content of step 701 in the method 700 shown in FIG. 7. Details are not described herein again.

Optionally, for a detailed implementation process of sending the first signal by the sending unit 1202, refer to related content of step 702 in the method 700 shown in FIG. 7. Details are not described herein again.

Optionally, the processing unit 1201 is further configured to generate a second signal to be sent to a third node, where a third frequency resource is used for the second signal; the third frequency resource is adjacent to a fourth frequency resource; the fourth frequency resource is used for transmitting a signal of the third node and the signal transmitted on the fourth frequency resource is different from the second signal, or the fourth frequency resource is not used for transmitting a signal; and a width of the fourth frequency resource is greater than or equal to a width of the third frequency resource.

The sending unit 1202 is further configured to send a first group of signals to the second node and the third node, where the first group of signals includes the first signal and the second signal.

Optionally, for a detailed implementation process of generating the second signal by the processing unit 1201, refer to related content of step 701 in the method 700 shown in FIG. 7. Details are not described herein again.

Optionally, for a detailed implementation process of sending the first group of signals by the sending unit 1202, refer to related content of step 702 in the method 700 shown in FIG. 7. Details are not described herein again.

Optionally, the first signal is adjacent to the second signal, and the second frequency resource and the fourth frequency resource overlap in frequency.

Optionally, the second frequency resource is used for transmitting a signal of the second node. The processing unit 1201 is further configured to generate a third signal to be sent to the second node, where the second frequency resource is used for transmitting the third signal, and an information amount of the third signal is less than an information amount of the first signal, or transmit power of the third signal is less than transmit power of the first signal.

The sending unit 1202 is further configured to send the third signal.

Optionally, for a detailed implementation process of generating the third signal by the processing unit 1201, refer to related content of step 701 in the method 700 shown in FIG. 7. Details are not described herein again.

Optionally, for a detailed implementation process of sending the third signal by the sending unit 1202, refer to related content of step 702 in the method 700 shown in FIG. 7. Details are not described herein again.

Optionally, frequency of a local oscillator laser of the second node is within a range from first frequency to second frequency, the first frequency is frequency at a junction of the first frequency resource and the second frequency resource, the second frequency is intermediate frequency of a target frequency resource, the target frequency resource includes the first frequency resource and the second frequency resource, and the local oscillator laser is a laser signal used by the second node to receive the first signal.

Optionally, the first signal belongs to the first group of signals, and the first group of signals includes at least one signal.

The processing unit 1201 is further configured to generate a fourth signal to be sent to a fourth node, where a fifth frequency resource used for the fourth signal is adjacent to a sixth frequency resource, the sixth frequency resource is used for transmitting a signal of the fourth node or is not used for transmitting a signal, a width of the sixth frequency resource is greater than or equal to a width of the fifth frequency resource, the fourth signal belongs to a second group of signals, and the second group of signals includes at least one signal.

The sending unit 1202 is configured to: send a first channel of signals, where the first channel of signals includes the first group of signals and the second group of signals, a guard interval exists between the first group of signals and the second group of signals, and the first channel of signals is used for enabling a filtering unit to split the first group of signals and the second group of signals at the guard interval; and send the first group of signals to the second node, and send the second group of signals to the fourth node, where the filtering unit is located on a path from the apparatus 1200 to the second node and the fourth node.

Optionally, for a detailed implementation process of generating the fourth signal by the processing unit 1201, refer to related content of step 701 in the method 700 shown in FIG. 7. Details are not described herein again.

Optionally, for a detailed implementation process of sending the first channel of signals by the sending unit 1202, refer to related content of step 702 in the method 700 shown in FIG. 7. Details are not described herein again.

Optionally, the apparatus 1200 further includes:
a receiving unit 1203, configured to receive a fifth signal sent by the second node and a sixth signal sent by the third node, where a seventh frequency resource is used for the fifth signal, the seventh frequency resource is adjacent to an eighth frequency resource, a ninth frequency resource is used for the sixth signal, the eighth frequency resource is adjacent to the ninth frequency resource, and a signal transmitted on the eighth frequency resource includes a conjugate signal of the fifth signal and a conjugate signal of the sixth signal.

Optionally, for a detailed implementation process of receiving the fifth signal and the sixth signal by the receiving unit 1203, refer to related content of step 703 in the method 700 shown in FIG. 7. Details are not described herein again.

In this embodiment of this application, the processing unit generates the first signal, where the first frequency resource used for the first signal is adjacent to the second frequency resource; the second frequency resource is used for transmitting a signal to be sent to the second node, or the second frequency resource is not used for transmitting a signal; and the width of the second frequency resource is greater than or equal to the width of the first frequency resource. In this case, when the second node receives the first signal by using a simplified coherent receiver, the signal on the second frequency resource does not affect receiving of the first signal on the first frequency resource by the simplified coherent receiver, so that the second node can receive a signal by using the simplified coherent receiver. The simplified coherent receiver has a simple structure and low costs, and therefore communication costs are reduced.

Refer to FIG. 13. An embodiment of this application provides a communication apparatus 1300. The apparatus 1300 is deployed on the foregoing second node, where the second node may be the second node in the network architecture 100 shown in FIG. 1, FIG. 2, FIG. 3, FIG. 4, FIG. 5, or FIG. 6, or may be the second node in the method 700 shown in FIG. 7; and includes:
a receiving unit 1301, configured to receive a first signal, where a first frequency resource is used for the first signal; the first frequency resource is adjacent to a second frequency resource; the second frequency resource is used for transmitting a signal of the apparatus 1300 and the signal transmitted on the second frequency resource is different from the first signal, or the second frequency resource is not used for transmitting a signal; and a width of the second frequency resource is greater than or equal to a width of the first frequency resource; and
a processing unit 1302, configured to obtain information content of the first signal from the first signal.

Optionally, for a detailed implementation process of receiving the first signal by the receiving unit 1301, refer to related content of step 703 in the method 700 shown in FIG. 7. Details are not described herein again.

Optionally, for a detailed implementation process of obtaining the information content of the first signal by the processing unit 1302, refer to related content of step 703 in the method 700 shown in FIG. 7. Details are not described herein again.

The receiving unit 1301 is configured to receive a first group of signals, where the first group of signals includes a second signal and the first signal; the second signal is a signal of a third node; a third frequency resource is used for the second signal; the third frequency resource is adjacent to a fourth frequency resource; the fourth frequency resource is used for transmitting a signal of the third node and the signal transmitted on the fourth frequency resource is different from the second signal, or the fourth frequency resource is not used for transmitting a signal; and a width of the fourth frequency resource is greater than or equal to a width of the third frequency resource.

The processing unit 1302 is configured to obtain the first signal from the first group of signals.

Optionally, for a detailed implementation process of receiving a first channel of signals by the receiving unit 1301, refer to related content of step 703 in the method 700 shown in FIG. 7. Details are not described herein again.

Optionally, for a detailed implementation process of obtaining the first signal by the processing unit 1302, refer to related content of step 703 in the method 700 shown in FIG. 7. Details are not described herein again.

Optionally, the first signal is adjacent to the second signal, and the second frequency resource and the fourth frequency resource overlap in frequency.

Optionally, the second frequency resource is used for transmitting a signal of the apparatus 1300. The receiving unit 1301 is further configured to receive a third signal, where a frequency resource used for the third signal is the second frequency resource, and an information amount of the third signal is less than an information amount of the first signal, or transmit power of the third signal is less than transmit power of the first signal.

Optionally, for a detailed implementation process of receiving the third signal by the receiving unit 1301, refer to related content of step 703 in the method 700 shown in FIG. 7. Details are not described herein again.

Optionally, frequency of a local oscillator laser of the apparatus 1300 is within a range from first frequency to second frequency, the first frequency is frequency at a junction of the first frequency resource and the second frequency resource, the second frequency is intermediate frequency of a target frequency resource, and the target frequency resource includes the first frequency resource and the second frequency resource.

The receiving unit 1301 is configured to receive the first signal based on the local oscillator laser.

Optionally, for a detailed implementation process of receiving the first signal by the receiving unit 1301 based on the local oscillator laser, refer to related content of step 703 in the method 700 shown in FIG. 7. Details are not described herein again.

In this embodiment of this application, because the first frequency resource used for the received first signal is adjacent to the second frequency resource; the second frequency resource is used for transmitting a signal to be sent to the second node, or the second frequency resource is not used for transmitting a signal; and the width of the second frequency resource is greater than or equal to the width of the first frequency resource, when the processing unit can obtain the information content of the first signal by using a simplified coherent receiver, the signal on the second frequency resource does not affect obtaining of the information content of the first signal on the first frequency resource by the simplified coherent receiver, so that the simplified coherent receiver can be used to receive a signal. The simplified coherent receiver has a simple structure and low costs, and therefore communication costs are reduced.

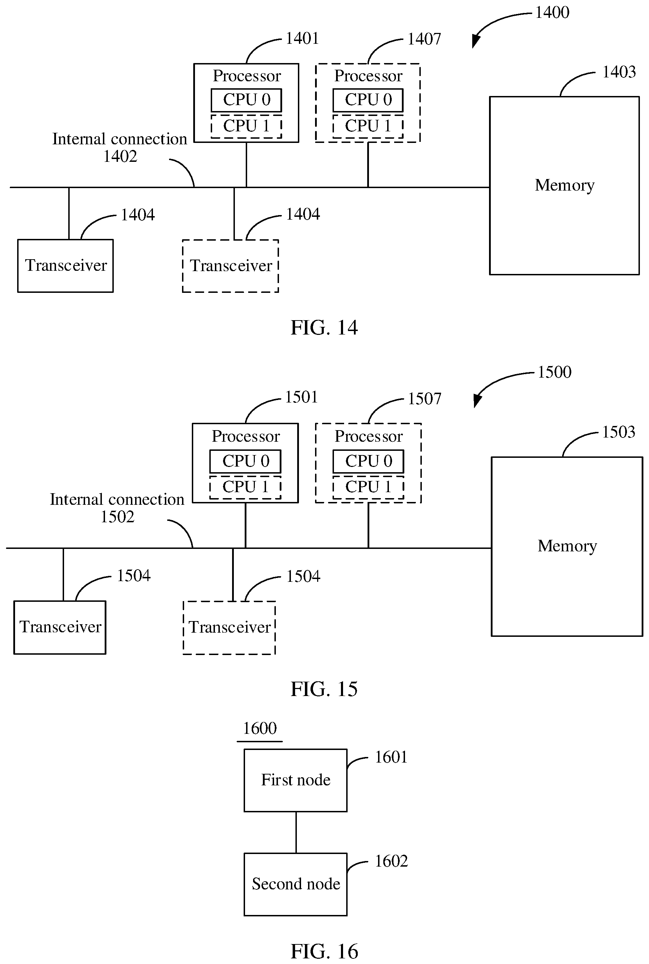

FIG. 14 is a diagram of a first node 1400 according to an embodiment of this application. The first node 1400 may be the first node in any one of the foregoing embodiments. For example, the first node 1400 may be the first node in the network architecture 100 shown in FIG. 1, FIG. 2, FIG. 3, FIG. 4, FIG. 5, or FIG. 6, or may be the first node in the method 700 shown in FIG. 7. The first node 1400 includes at least one processor 1401, an internal connection 1402, a memory 1403, and at least one transceiver 1404.

The first node 1400 is an apparatus of a hardware structure.

In some embodiments, the first node 1400 may be configured to implement functional modules in the apparatus 1200 in FIG. 12. For example, a person skilled in the art may figure out that the processing unit 1201 in the apparatus 1200 shown in FIG. 12 may be implemented by the at least one processor 1401 by invoking code in the memory 1403, and the sending unit 1202 in the apparatus 1200 shown in FIG. 12 may be implemented by the at least one transceiver 1404.

Optionally, the processor 1401 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions in this application.

The internal connection 1402 may include a path for transmitting information between the foregoing components. Optionally, the internal connection 1402 is a board, a bus, or the like.

The transceiver 1404 is configured to communicate with another node or a communication network.

The memory 1403 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. The memory may exist independently, and is connected to the processor through the bus. The memory may alternatively be integrated with the processor.

The memory 1403 is configured to store application code for executing the solutions of this application, and the execution is controlled by the processor 1401. The processor 1401 is configured to execute the application code stored in the memory 1403, and cooperate with the at least one transceiver 1404, so that the first node 1400 implements a function in the method in this patent.

During specific implementation, in an embodiment, the processor 1401 may include one or more CPUs such as a CPU 0 and a CPU 1 in FIG. 14.

During specific implementation, in an embodiment, the first node 1400 may include a plurality of processors, for example, the processor 1401 and a processor 1407 in FIG. 14. Each of the processors may be a single-core (single-CPU) processor, or may be a multi-core (multi-CPU) processor. The processor herein may be one or more devices, circuits, and/or processing cores configured to process data (for example, computer program instructions).

FIG. 15 is a diagram of a second node 1500 according to an embodiment of this application. The second node 1500 may be the second node in any one of the foregoing embodiments. For example, the second node 1500 may be the second node in the network architecture 100 shown in FIG. 1, FIG. 2, FIG. 3, FIG. 4, FIG. 5, or FIG. 6, or may be the second node in the method 700 shown in FIG. 7. The second node 1500 includes at least one processor 1501, an internal connection 1502, a memory 1503, and at least one transceiver 1504.

The second node 1500 is an apparatus of a hardware structure.

In some embodiments, the second node 1500 may be configured to implement functional modules in the apparatus 1300 in FIG. 13. For example, a person skilled in the art may figure out that the processing unit 1302 in the apparatus 1300 shown in FIG. 13 may be implemented by the at least one processor 1501 by invoking code in the memory 1503, and the receiving unit 1301 in the apparatus 1300 shown in FIG. 13 may be implemented by the at least one transceiver 1504.

Optionally, the processor 1501 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions in this application.

The internal connection 1502 may include a path for transmitting information between the foregoing components. Optionally, the internal connection 1502 is a board, a bus, or the like.

The transceiver 1504 is configured to communicate with another device or a communication network.

The memory 1503 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. The memory may exist independently, and is connected to the processor through the bus. The memory may alternatively be integrated with the processor.

The memory 1503 is configured to store application code for executing the solutions of this application, and the execution is controlled by the processor 1501. The processor 1501 is configured to execute the application code stored in the memory 1503, and cooperate with the at least one transceiver 1504, so that the second node 1500 implements a function in the method in this patent.

During specific implementation, in an embodiment, the processor 1501 may include one or more CPUs such as a CPU 0 and a CPU 1 in FIG. 15.

During specific implementation, in an embodiment, the second node 1500 may include a plurality of processors, for example, the processor 1501 and a processor 1507 in FIG. 15. Each of the processors may be a single-core (single-CPU) processor, or may be a multi-core (multi-CPU) processor. The processor herein may be one or more devices, circuits, and/or processing cores configured to process data (for example, computer program instructions).

Refer to FIG. 16. An embodiment of this application provides a communication system 1600. The communication system 1600 includes a first node 1601 and a second node 1602.

The first node 1601 may be the apparatus 1200 shown in FIG. 12, and the second node 1602 may be the apparatus 1300 shown in FIG. 13. Alternatively, the first node 1601 may be the first node 1400 shown in FIG. 14, and the second node 1602 may be the second node 1500 shown in FIG. 15.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, or improvement made within the principle of this application should fall within the protection scope of this application.

## Claims

1. A communication method, wherein the method comprises:
generating, by a first node, a first signal to be sent to a second node, wherein a first frequency resource is used for the first signal; the first frequency resource is adjacent to a second frequency resource; the second frequency resource is used for transmitting a signal to be sent to the second node and the signal transmitted on the second frequency resource is different from the first signal, or the second frequency resource is not used for transmitting a signal; and a width of the second frequency resource is greater than or equal to a width of the first frequency resource; and
sending, by the first node, the first signal.

2. The method according to claim 1, wherein the method further comprises:
generating, by the first node, a second signal to be sent to a third node, wherein a third frequency resource is used for the second signal; the third frequency resource is adjacent to a fourth frequency resource; the fourth frequency resource is used for transmitting a signal to be sent to the third node and the signal transmitted on the fourth frequency resource is different from the second signal, or the fourth frequency resource is not used for transmitting a signal; and a width of the fourth frequency resource is greater than or equal to a width of the third frequency resource; and
sending, by the first node, the first signal comprises:
sending, by the first node, a first group of signals to the second node and the third node, wherein the first group of signals comprises the first signal and the second signal.

3. The method according to claim 2, wherein the first signal is adjacent to the second signal, and the second frequency resource and the fourth frequency resource overlap in frequency.

4. The method according to any one of claims 1 to 3, wherein the second frequency resource is used for transmitting a signal of the second node, and the method further comprises:
generating, by the first node, a third signal to be sent to the second node, wherein the second frequency resource is used for transmitting the third signal, and an information amount of the third signal is less than an information amount of the first signal, or transmit power of the third signal is less than transmit power of the first signal; and
sending, by the first node, the third signal.

5. The method according to any one of claims 1 to 4, wherein frequency of a local oscillator laser of the second node is within a range from first frequency to second frequency, the first frequency is frequency at a junction of the first frequency resource and the second frequency resource, the second frequency is intermediate frequency of a target frequency resource, the target frequency resource comprises the first frequency resource and the second frequency resource, and the local oscillator laser is a laser signal used by the second node to receive the first signal.

6. The method according to any one of claims 1 to 5, wherein the first signal belongs to the first group of signals, the first group of signals comprises at least one signal, and the method further comprises:
generating, by the first node, a fourth signal to be sent to a fourth node, wherein a fifth frequency resource used for the fourth signal is adjacent to a sixth frequency resource, the sixth frequency resource is used for transmitting a signal to be sent to the fourth node or is not used for transmitting a signal, a width of the sixth frequency resource is greater than or equal to a width of the fifth frequency resource, the fourth signal belongs to a second group of signals, and the second group of signals comprises at least one signal; and
sending, by the first node, the first signal comprises:
sending, by the first node, a first channel of signals, wherein the first channel of signals comprises the first group of signals and the second group of signals, a guard interval exists between the first group of signals and the second group of signals, and the first channel of signals is used for enabling a filtering unit to split the first group of signals and the second group of signals at the guard interval; and sending the first group of signals to the second node, and sending the second group of signals to the fourth node, wherein the filtering unit is located on a path from the first node to the second node and the fourth node.

7. The method according to any one of claims 1 to 6, wherein the method further comprises:
receiving, by the first node, a fifth signal sent by the second node and a sixth signal sent by the third node, wherein a seventh frequency resource is used for the fifth signal, the seventh frequency resource is adjacent to an eighth frequency resource, a ninth frequency resource is used for the sixth signal, the eighth frequency resource is adjacent to the ninth frequency resource, and a signal transmitted on the eighth frequency resource comprises a conjugate signal of the fifth signal and a conjugate signal of the sixth signal.

8. A communication method, wherein the method comprises:
receiving, by a second node, a first signal, wherein a first frequency resource is used for the first signal; the first frequency resource is adjacent to a second frequency resource; the second frequency resource is used for transmitting a signal to be sent to the second node and the signal transmitted on the second frequency resource is different from the first signal, or the second frequency resource is not used for transmitting a signal; and a width of the second frequency resource is greater than or equal to a width of the first frequency resource; and
obtaining information content of the first signal from the first signal.

9. The method according to claim 8, wherein receiving, by the second node, the first signal comprises:
receiving, by the second node, a first group of signals, wherein the first group of signals comprises a second signal and the first signal; the second signal is a signal of a third node; a third frequency resource is used for the second signal; the third frequency resource is adjacent to a fourth frequency resource; the fourth frequency resource is used for transmitting a signal of the third node and the signal transmitted on the fourth frequency resource is different from the second signal, or the fourth frequency resource is not used for transmitting a signal; and a width of the fourth frequency resource is greater than or equal to a width of the third frequency resource; and
the method further comprises:
obtaining, by the second node, the first signal from the first group of signals.

10. The method according to claim 9, wherein the first signal is adjacent to the second signal, and the second frequency resource and the fourth frequency resource overlap in frequency.

11. The method according to any one of claims 8 to 10, wherein the second frequency resource is used for transmitting a signal of the second node, and the method further comprises:
receiving, by the second node, a third signal, wherein a frequency resource used for the third signal is the second frequency resource, and an information amount of the third signal is less than an information amount of the first signal, or transmit power of the third signal is less than transmit power of the first signal.

12. The method according to any one of claims 8 to 11, wherein frequency of a local oscillator laser of the second node is within a range from first frequency to second frequency, the first frequency is frequency at a junction of the first frequency resource and the second frequency resource, the second frequency is intermediate frequency of a target frequency resource, and the target frequency resource comprises the first frequency resource and the second frequency resource; and
receiving, by the second node, the first signal comprises:
receiving, by the second node, the first signal based on the local oscillator laser.

13. A communication apparatus, wherein the apparatus comprises:
a processing unit, configured to generate a first signal to be sent to a second node, wherein a first frequency resource is used for the first signal; the first frequency resource is adjacent to a second frequency resource; the second frequency resource is used for transmitting a signal of the second node and the signal transmitted on the second frequency resource is different from the first signal, or the second frequency resource is not used for transmitting a signal; and a width of the second frequency resource is greater than or equal to a width of the first frequency resource; and
a sending unit, configured to send the first signal.

14. The apparatus according to claim 13, wherein
the processing unit is further configured to generate a second signal to be sent to a third node, wherein a third frequency resource is used for the second signal; the third frequency resource is adjacent to a fourth frequency resource; the fourth frequency resource is used for transmitting a signal of the third node and the signal transmitted on the fourth frequency resource is different from the second signal, or the fourth frequency resource is not used for transmitting a signal; and a width of the fourth frequency resource is greater than or equal to a width of the third frequency resource; and
the sending unit is further configured to send a first group of signals to the second node and the third node, wherein the first group of signals comprises the first signal and the second signal.

15. The apparatus according to claim 14, wherein the first signal is adjacent to the second signal, and the second frequency resource and the fourth frequency resource overlap in frequency.

16. The apparatus according to any one of claims 13 to 15, wherein the second frequency resource is used for transmitting a signal of the second node;
the processing unit is further configured to generate a third signal to be sent to the second node, wherein the second frequency resource is used for transmitting the third signal, and an information amount of the third signal is less than an information amount of the first signal, or transmit power of the third signal is less than transmit power of the first signal; and
the sending unit is further configured to send the third signal.

17. The apparatus according to any one of claims 13 to 16, wherein frequency of a local oscillator laser of the second node is within a range from first frequency to second frequency, the first frequency is frequency at a junction of the first frequency resource and the second frequency resource, the second frequency is intermediate frequency of a target frequency resource, the target frequency resource comprises the first frequency resource and the second frequency resource, and the local oscillator laser is a laser signal used by the second node to receive the first signal.

18. The apparatus according to any one of claims 13 to 17, wherein the first signal belongs to the first group of signals, and the first group of signals comprises at least one signal;
the processing unit is further configured to generate a fourth signal to be sent to a fourth node, wherein a fifth frequency resource used for the fourth signal is adjacent to a sixth frequency resource, the sixth frequency resource is used for transmitting a signal of the fourth node or is not used for transmitting a signal, a width of the sixth frequency resource is greater than or equal to a width of the fifth frequency resource, the fourth signal belongs to a second group of signals, and the second group of signals comprises at least one signal; and
the sending unit is configured to: send a first channel of signals, wherein the first channel of signals comprises the first group of signals and the second group of signals, a guard interval exists between the first group of signals and the second group of signals, and the first channel of signals is used for enabling a filtering unit to split the first group of signals and the second group of signals at the guard interval; and send the first group of signals to the second node, and send the second group of signals to the fourth node, wherein the filtering unit is located on a path from the apparatus to the second node and the fourth node.

19. The apparatus according to any one of claims 13 to 18, wherein the apparatus further comprises:
a receiving unit, configured to receive a fifth signal sent by the second node and a sixth signal sent by the third node, wherein a seventh frequency resource is used for the fifth signal, the seventh frequency resource is adjacent to an eighth frequency resource, a ninth frequency resource is used for the sixth signal, the eighth frequency resource is adjacent to the ninth frequency resource, and a signal transmitted on the eighth frequency resource comprises a conjugate signal of the fifth signal and a conjugate signal of the sixth signal.

20. A communication apparatus, wherein the apparatus comprises:
a receiving unit, configured to receive a first signal, wherein a first frequency resource is used for the first signal; the first frequency resource is adjacent to a second frequency resource; the second frequency resource is used for transmitting a signal of the apparatus and the signal transmitted on the second frequency resource is different from the first signal, or the second frequency resource is not used for transmitting a signal; and a width of the second frequency resource is greater than or equal to a width of the first frequency resource; and
a processing unit, configured to obtain information content of the first signal from the first signal.

21. The apparatus according to claim 20, wherein
the receiving unit is configured to receive a first group of signals, wherein the first group of signals comprises a second signal and the first signal; the second signal is a signal of a third node; a third frequency resource is used for the second signal; the third frequency resource is adjacent to a fourth frequency resource; the fourth frequency resource is used for transmitting a signal of the third node and the signal transmitted on the fourth frequency resource is different from the second signal, or the fourth frequency resource is not used for transmitting a signal; and a width of the fourth frequency resource is greater than or equal to a width of the third frequency resource; and
the processing unit is configured to obtain the first signal from the first group of signals.

22. The apparatus according to claim 21, wherein the first signal is adjacent to the second signal, and the second frequency resource and the fourth frequency resource overlap in frequency.

23. The apparatus according to any one of claims 20 to 22, wherein the second frequency resource is used for transmitting a signal of the apparatus; and
the receiving unit is further configured to receive a third signal, wherein a frequency resource used for the third signal is the second frequency resource, and an information amount of the third signal is less than an information amount of the first signal, or transmit power of the third signal is less than transmit power of the first signal.

24. The apparatus according to any one of claims 20 to 23, wherein frequency of a local oscillator laser of the apparatus is within a range from first frequency to second frequency, the first frequency is frequency at a junction of the first frequency resource and the second frequency resource, the second frequency is intermediate frequency of a target frequency resource, and the target frequency resource comprises the first frequency resource and the second frequency resource; and
the receiving unit is configured to receive the first signal based on the local oscillator laser.

25. A first node, comprising a memory, a processor, and a computer program stored in the memory, wherein the processor executes the computer program, to enable the first node to implement the method according to any one of claims 1 to 7.

26. A second node, comprising a memory, a processor, and a computer program stored in the memory, wherein the processor executes the computer program, to enable the second node to implement the method according to any one of claims 8 to 12.

27. A communication system, wherein the communication system comprises the apparatus according to any one of claims 13 to 19 and the apparatus according to any one of claims 20 to 24, or the system comprises the first node according to claim 25 and the second node according to claim 26.

28. A computer storage medium, storing a computer program, wherein when the computer program is executed by a processor, the method according to any one of claims 1 to 12 is implemented.

29. A computer program product, comprising a computer program, wherein when the computer program is executed by a computer, the method according to any one of claims 1 to 12 is implemented.
